# EUROPEAN PATENT SPECIFICATION

(11) **EP 4 125 262 B1**
(45) Date of publication and mention of the grant of the patent: **03.09.2025**
(21) Application number: 21188000.0
(22) Date of filing: 27.07.2021
(51) Int. Cl.: H04M 1/74, H02H 9/04, H01C 8/04, H01C 7/12

(54) **APPARATUS AND METHOD FOR PREVENTING AND DAMPING OF VOLTAGE AND CURRENT PEAKS OF EXTERNAL AND INTERNAL ORIGIN FOR TELECOMMUNICATION NETWORKS**
VORRICHTUNG UND VERFAHREN ZUR VERMEIDUNG UND DÄMPFUNG VON SPANNUNGS- UND STROMSPITZEN EXTERNEN UND INTERNEN URSPRUNGS FÜR TELEKOMMUNIKATIONSNETZE
APPAREIL ET MÉTHODE DE PRÉVENTION ET D'AMORTISSEMENT DE PICS DE TENSION ET DE COURANT D'ORIGINE EXTERNE ET INTERNE POUR DES RÉSEAUX DE TÉLÉCOMMUNICATION

(43) Date of publication of application: 01.02.2023
(73) Proprietor: Ingelva S.r.l., 21013 Gallarate (Varese) (IT)
(72) Inventor: DE BERNARDI, Davide, 21013 Gallarate (Varese) (IT)
(74) Representative: Anselmi, Davide

(56) References cited:
- WO-A1-03/088356
- IT-A1- VA 950 008
- KR-A- 20160 009 426
- US-A1- 2015 171 619

## Description

### TECHNICAL FIELD

The present invention relates to an apparatus and a method for preventing and damping of voltage and current peaks of external and internal origin for telecommunication networks/systems in which the term "telecommunications" means mainly but not only voice networks, data networks, Ethernet and the like.

The term "external and internal" refers to any electromagnetic stress such as shocks, electrical vibrations (of electric charges), pulses with steep fronts of atmospheric and terrestrial origin and alternating often at high frequency (due to harmonic and spurious resonances and interferences) in the telecommunication lines.

The term "very low voltage" means nominal operating voltages of the electrical supply plant ≤ 50 V in alternating current and ≤ 120 V in direct current.

In particular, the tuner-damper (3), the functional unit of the apparatus (1), is connected in junction to the voice and/or data lines, in which electric signals of just a few volts are exchanged.

Two aspects thus coexist and cooperate and do not conflict outside and inside the apparatus 1: outside, the input data connector (2a) and output data connector (2b) arranged serially on the voice and/or data electric line (101); inside, the tuner-damper (3), functional unit of the apparatus (1), connected in junction to the voice and/or data electric line (101). In the following description, the connection of the apparatus 1 is indicated explicitly as: junction connection, being the functional connection; the actual connection.

In still greater detail, the apparatus (1), in accordance with the *ratio* of its exclusive prevention method, in order to meet all the levels of preventive protection for a very low-voltage voice and/or data electric line (101) of a telecommunication network/system and of the voice and/or data user apparatuses connected thereto, is arranged to be connected in junction both along the very low voltage electric line (101) of the user (i.e. immediately downstream of the point of delivery of the supplier body of the service), immediately upstream of the inputs(in) and immediately downstream of the outputs(out) of the nodal apparatuses for managing and using the service (such as control centres, control units, server hardware, modems, routers, switches), in junction immediately upstream of inputs(in) of the voice and/or data user apparatuses, in general, connected thereto (such as PCs, video/audio telephones) and in junction with the electric line (101) and LAN (Local Area Network), equally distributed along distinct sections of the electric line (101) and LAN and with set pitches according to whether the aforesaid sections are overhead or buried and indoor or outdoor.

### PRIOR ART

As is known, voice and/or data lines, because of their constitution and great linear extent over the terrain, are generally very delicate structures and are vulnerable to electromagnetic shocks and are therefore high risk, subject to external and internal overvoltages and overcurrents and disturbances of different types that may occur in a telecommunication network/system.

Currently, the so-called "protection" devices against overvoltages (international acronym SPD, Surge Protective Device) used today (discharges of various types) also for telecommunications are limited to diverting the energy of overvoltages and overcurrents to earth, with all the known harmful and destructive effects deriving therefrom.

In particular, as known, such "protection" devices claim to divert to earth by an earthing system, without harm, the overvoltages and overcurrents but instead harm the environment (people and assets: the voice and/or data lines, control centres, control units, voice and/or data apparatuses connected thereto, with fire and/or explosion hazards).

In fact, it should be noted that the currently known systems only intervene on the "tail" of a voltage and current pulse, therefore with a pulse already formed, without preventing such a dangerous situation.

For example, the varistors (dischargers with a non-linear resistance) act as an open circuit between the voice and/or data line and the earthing system, whereas when an overvoltage and overcurrent occur, the impedance of the varistor is reduced for a few dozen nanoseconds and the device acts as a closed circuit, discharging the overvoltage and overcurrent to earth via the earthing system, always with all the known direct and indirect harmful and destructive effects arising therefrom: electrical discharges from the voice and/or data line to earth, reverse electrical discharges (from earth to the voice and/or data line) and resulting electroinduction.

Examples of prior art are disclosed in the documents US 2015/171619, WO03/088356, and IT VA 950 008.

### OBJECTS OF THE PRESENT INVENTION

In this situation, the object of the present invention is to realise an apparatus and a method for preventing and damping of voltage and current peaks of external and internal origin for voice and/or data lines which overcome the aforementioned drawbacks.

It is in particular an object of the present invention to realise an apparatus for preventing and damping of voltage and current peaks for telecommunication networks/systems which allows the formation of such voltage and current peaks to be prevented.

It is also an object of the present invention to realise an apparatus for preventing and damping of voltage and current peaks for telecommunication networks/systems which allows such voltage and current peaks to be damped and dissipated, avoiding discharge to earth by the earthing system.

The indicated objects are substantially achieved by an apparatus and a method for preventing and damping of voltage and current peaks for very low voltage voice and/or data electric lines of telecommunication networks/systems, according to what is described herein. The invention is defined by the appended claims.

### BRIEF DESCRIPTION OF THE FIGURES

Further features and advantages of the present invention will more greatly emerge from the detailed description of some preferred but not exclusive embodiments of an apparatus and a method for preventing and damping of voltage and current peaks for telecommunication networks/systems illustrated in the appended drawings, in which:
- figure 1a shows a side view of an apparatus according to the present invention;
- figure 1b shows a side view in transparency of the apparatus of figure 1a;
- figure 1c shows a view from below in transparency of the apparatus of figure 1a;

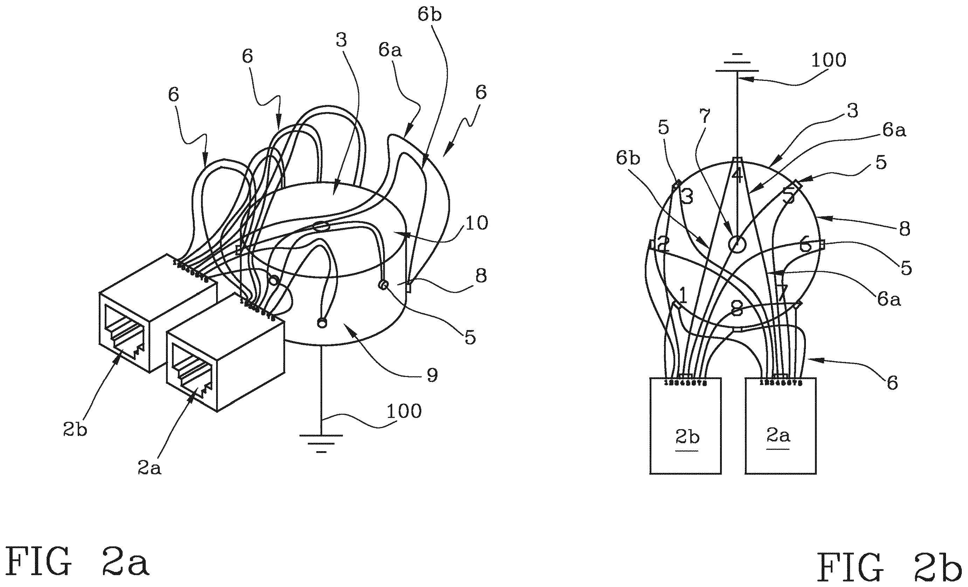

- figure 2a shows an axonometric side view of the content of the apparatus of figure 1a with some parts removed to better highlight others;
- figure 2b shows a top view of the content of figure 2a;

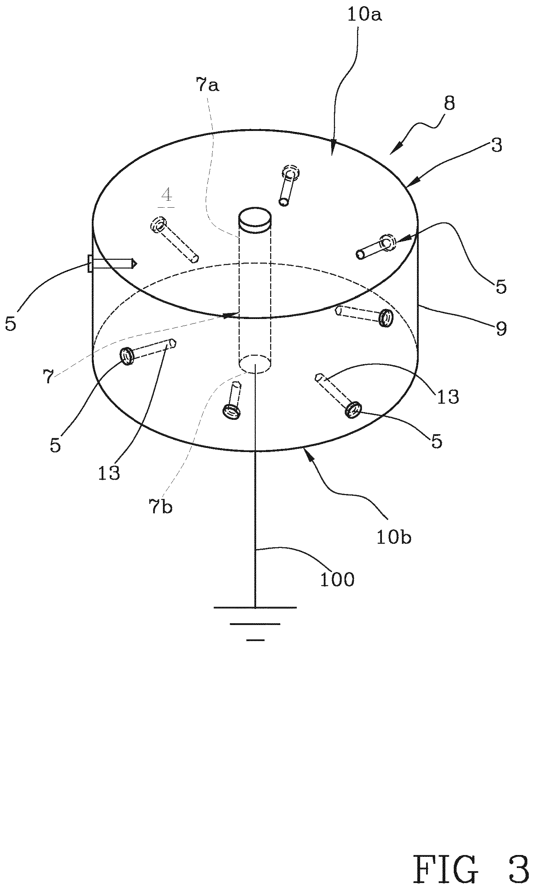

- figure 3 shows a frontal axonometric view of a detail of the content of figure 2a;
- figures 4a, 4b, 4c, 4d show, in various views, an alternative embodiment of the apparatus of figure 1a; and
- figures 5a and 5b show in respective top and side views a finned metallic plate/crown 21, which also acts as a cover, of the damper-tuner 3.

### DETAILED DESCRIPTION OF ONE OR MORE PREFERRED EMBODIMENTS OF THE PRESENT INVENTION

With reference to the figures cited, an apparatus for preventing and damping of voltage and current peaks of external and internal origin for very low voltage electric lines, telephone and/or data lines, lines of telecommunication networks/systems according to the present invention has been indicated in its entirety by the reference number 1.

The term "electric line" identifies, in the specific case considered below, a data cable (Ethernet) comprising eight internal cables (normally of different colours).

In particular, the apparatus 1 comprises an input (in) data connector 2a, configured to receive an electric signal from the voice and/or data electric line 101, and an output (out) data connector 2b configured to return said electric signal to the voice and/or data electric line 101.

As it is possible to see in the accompanying figures, both the input (in) data connector 2a and the output (out) data connector 2b are "female" data connectors. In all cases, it must be understood that the data connectors 2a, 2b could be realised according to different embodiments that are not expressly shown or disclosed here.

In practice, the electric line is cut into two terminals, the input (in) terminal 11 and the outlet (out) terminal 12, each of which is connected to a respective "male" connector (RJ45) configured to be inserted into respective female input (in) 2a and output (out) 2b connectors, according to the present invention.

According to the present invention, the apparatus 1 comprises a tuner-damper 3 having its own casing 8 and internal volume 4, the latter comprising a mixture of an incoherent, non-hygroscopic sediment of particles (solid crystal nanocores: such as quartz, tourmalines, hemimorphites and the like) of a piezoelectric and pyroelectric material and a refractory inert material (dolomitic, marble grit and the like), in air, interposed between the input polar electrodes and the heat dissipation bar 7, configured to transform the energy load of the electromagnetic stress, which causes the overvoltages and overcurrents, into mechanical energy (vibrations, resulting relative movements of the particles and subsequent shocks to the particles) and into thermal energy (endogenous heat). Preferably, but not necessarily, this mixture of an incoherent, non-hygroscopic sediment of particles (solid crystal nanocores) of a piezoelectric and pyroelectric material and a refractory inert material, in air, is possibly supplemented with semiconductors (such as silicon carbide and the like) with variable valence that, adjusted together with the other essential particles of the mixture at different calibrations, contribute to preventing, absorbing and dissipating the hazardous energy load of the outer and inner electromagnetic stress defined above, starting from the more energetic stress of the "head" of the voltage pulse with a steep curve of atmospheric and terrestrial origin.

The tuner-damper 3 comprises a plurality of input polar electrodes 5 partially immersed inside this mixture and in contact therewith but separate and equidistant from one another.

Each input polar electrode 5 is connected to a respective cable 6 of the input (in) data connector 2a by electric wires and to a respective cable 6 of the output (out) data connector 2b.

In the accompanying figures (in particular 2a, 2b, 3) it is possible to see that there are eight input polar electrodes 5, respectively connected to eight electric cables 6 of the input data connector 2a and to eight electric cables 6 of the output data connector 2b.

Further, the tuner-damper 3 comprises at least one electrically conductive heat dissipation bar 7 immersed inside said mixture and connected, in use, to the earthing system 101, preferably by interposing an earth-block filter Antimpatto^{®} SCt.

This heat dissipation bar 7 has no metal contact with the input polar electrodes 5, the mixture itself being interposed between the heat dissipation bar 7 and the input polar electrodes 5.

Preferably, each input polar electrode 5 consists of a metal bar (13) (for example in the form of a screw) partially inserted into the mixture.

Preferably, the casing 8 of said tuner-damper 3 is cylinder-shaped and each input polar electrode 5 is inserted into a dedicated point (equally distributed defined points) through the lateral thickness 9 of said cylindrical casing and orthogonally to a plane touching the cylindrical casing in said point.

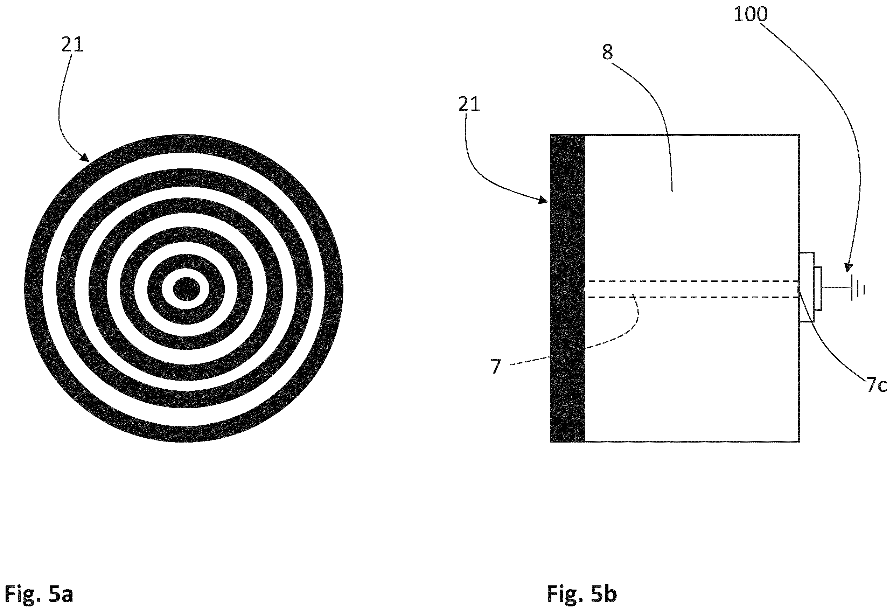

The heat dissipation bar 7 is positioned in the centre of the cylinder and orthogonally to the bases (10a,b) of said cylinder. Further, the dissipation bar 7 and the female input (in) 2a and output (out) 2b connectors are orthogonal to one another. The heat dissipation bar 7 has its own internal portion 7a that is immersed entirely in the mixture and two ends respectively, the one firmly joined metallically to a metallic threaded plate/crown 21 (like Dural - Duralluminio) for heat dissipation, which also acts as a cover (figures 5a and 5b), the other outer end 7b at the other base (in dielectric material) of the cylinder defining an output 7c connected, in use, to an earthing system 100.

The fins of the plate/crown 21 are concentric and made of alternating circular projections and recesses (shown in figure 7a with alternating black and white crowns).

In particular, each input polar electrode 5 extends between two opposite ends, an inner one immersed in the mixture and an outer one connected to the respective cable 6 of the data connector. In addition, the inner end of the input polar electrode has a half-sphere shape.

From the example illustrated in the accompanying figures, it should be noted that each cable 6 comprises its own input branch 6a and own output branch 6b connected together at the input polar electrode 5 so that each electric signal can be transmitted between the input (in) data connector 2a and the output(out) data connector 2b whereas any hazardous energy load of the external and internal electromagnetic stress defined above, which cause the overvoltages and overcurrents, is detected and transformed by the tuner-damper 3.

Preferably, the input data connectors 2a and 2b are category 7, but the present invention extends to any category of connector.

According to another aspect of the present invention, the apparatus 1 comprises a preferably flat resonating antenna 13, mounted on a flat support surface (wafer), arranged in contact with the outside of the casing 8 of the tuner-damper 3 and configured so as to maintain the anti-electromagnetic pollution (electrosmog) work of the tuner damping device 3 at extremes (work tolerance: 0%) by selectively discriminating between external and local electromagnetic polluting radiation.

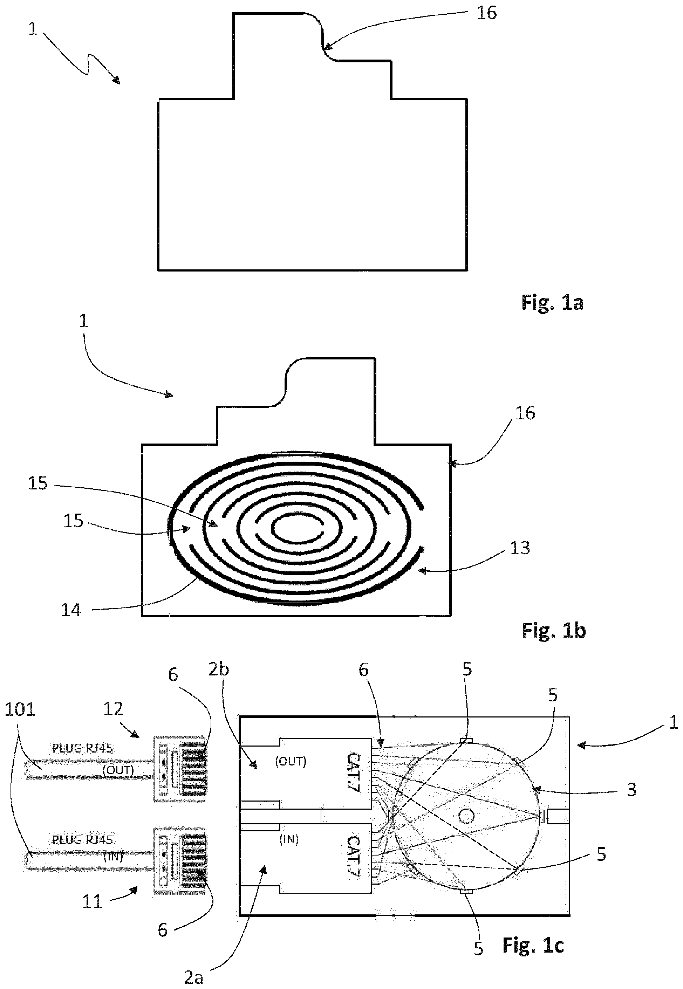

As it can be seen in the example of figure 1b, the resonating antenna 13 comprises a plurality of concentric metal elements 14, preferably of circular or rectangular or square shape that are separated from one another. Further, figure 1b also shows that the metal elements 14 are concentric and each is broken at a detachment point 15. Preferably, the position of this detachment point 15 between one element 14 and the other is opposed with respect to a median plane that cuts the antenna 13 orthogonally.

This resonant antenna 13 is configured to receive outer signals having a frequency comprised between 100 kHz and 10 GHz. Further, the apparatus 1 comprises an outer casing 16 shaped as a module for an electrical panel adapted to be installed on a DIN guide.

In other words, the apparatus 1 is mechanically like a normal electrical panel module housed on a DIN guide occupying the space of two installation modules. The outer casing 16 is made of polyvinyl chloride PVC and has an IP67 degree of protection.

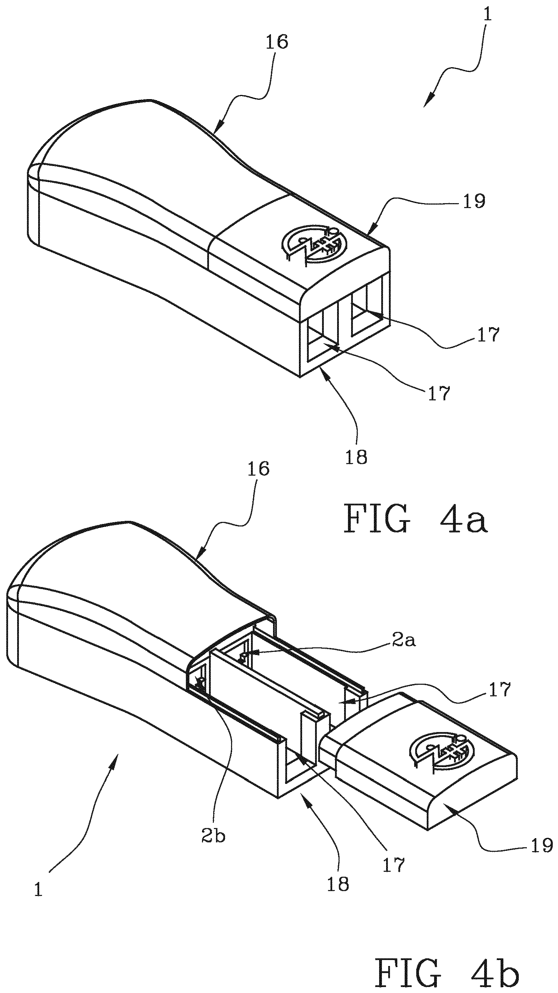

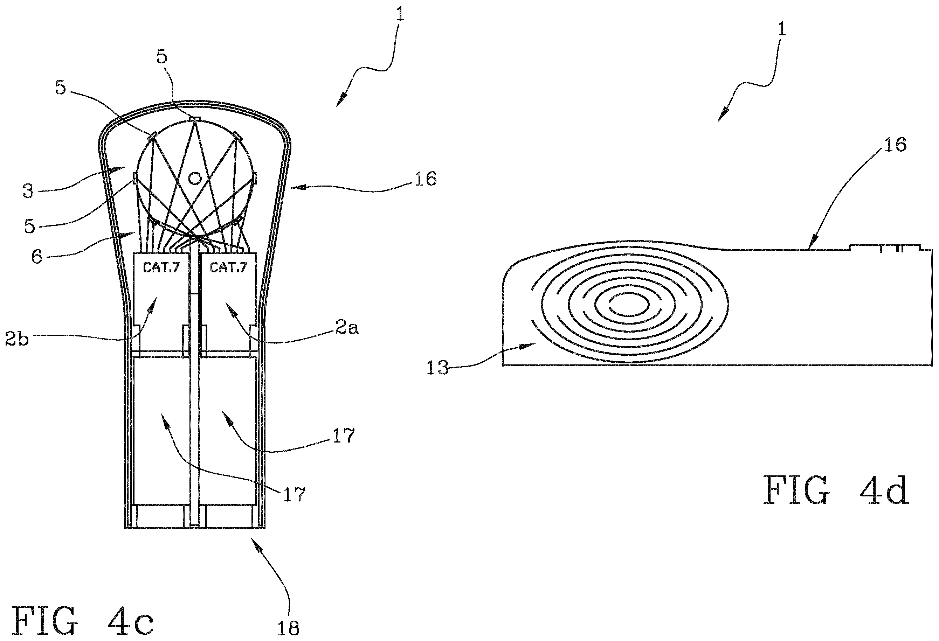

The alternative embodiment shown in figures 4a-4d of the present invention is realised according to what was described previously, but the container 16 is configured as a "stand alone" module (and is thus not adapted to be installed on a DIN guide). This container 16 has an elongated extension according to a direction that goes from the input data connectors 2a, 2b to the damper 3.

In detail, this container 16 is more tapered at the input data connectors 2a, 2b and is wider at the damper 3.

Preferably, this container has two distinct seats 17 that extend parallel from a bottom end 18 of the container 16 to the input data connectors 2a, 2b. Advantageously, said seats 17 are shaped to house the cables of the line 101 respectively for the two input data connectors 2a, 2b.

Preferably, these seats 17 are closed above by a removable cover 19 so as to promote the connection of the cables during a condition where the cover 19 has been removed (fig. 4b), and so as to maintain the cables in position during a condition of installation (fig. 4a) of the cover 19.

The inner structure of the container 16 is the same as the structure described previously.

The present invention further relates to a telecommunications network/system comprising one or more voice and/or data electric lines and the apparatus 1 described above in which at least one voice and/or data electric line 101 has an input terminal 11 having its own cables 6 connected to the input data connector 2a and its own output terminal 12 having its cables 6 connected to the output data connector 2b. In other words, externally, the input data connector (2a) and the output data connector (2b) are arranged serially along at least one very low voltage voice and/or data electric line (101), whereas internally the functional unit, the tuner-damper 3, is connected in junction to the voice and/or data electric line (101) to prevent, absorb, damp and dissipate the energy load of the electromagnetic stress, which causes the overvoltages and overcurrents, relative to the voice and/or data electric line (101), transforming the energy load into mechanical energy (vibrations, resulting relative movements of the particles and subsequent shocks to the particles) and into thermal energy (endogenous heat).

In this manner, the discharge to earth of the energy load is avoided.

The present invention achieves the set objects with the intrinsic and exclusive ability of ensuring safety.

The apparatus 1 intervenes by preventing, absorbing, damping and dissipating also disturbance phenomena present in the very low voltage electric lines, telephone and/or data lines, lines of telecommunication networks/systems like: harmonics and spurious emissions, which are harmful not only to the voice and/or data electrical line itself but particularly also to voice and/or data apparatuses that are functional to the line and to electric and electronic users connected to the line.

In addition to the aforesaid functions, the apparatus 1 neutralises local electromagnetic pollution (electrosmog), i.e. near the apparatus.

The present invention thus also solves disturbance phenomena - harmonic and spurious - and local electromagnetic pollution (electrosmog) phenomena, always with the intrinsic and exclusive ability to ensure safety.

## Claims

1. Apparatus (1) for preventing and damping of voltage and current peaks, of external and internal origin, for a very low voltage voice and/or data electric line (101) of a telecommunication network or system, based on detecting and transforming electromagnetic energy causing overvoltages and overcurrents, comprising:
an input data connector (2a) configured to receive an electric signal from the voice and/or data electric line (101);
an output data connector (2b) configured to return said electric signal to the voice and/or data electric line (101); and a tuner-damper (3) having its own casing (8) and internal volume (4), the latter comprising a mixture of an incoherent, non-hygroscopic sediment of particles of a piezoelectric and pyroelectric material and a refractory inert material, in air, configured to transform the energy load of external and internal electromagnetic stress, which causes the overvoltages and overcurrents, into mechanical energy and into thermal energy;
said tuner-damper (3) comprising:
a plurality of input polar electrodes (5) partially immersed inside said mixture and in contact therewith but separate and equidistant from one another;
each polar electrode (5) being connected to a respective cable (6) of the input data connector (2a) and to a respective cable (6) of the output data connector (2b); each input polar electrode (5) being configured to receive said electric signal; and
at least one heat dissipation and electrically conductive bar (7) at least partially immersed inside said mixture and connected, in use, to an earthing system (100).

2. The apparatus (1) according to claim 1, **characterised in that** said incoherent sediment of which the mixture is composed which is inserted into the internal volume (4) of the tuner-damper (3) comprises a semiconductor.

3. The apparatus (1) according to any one of the preceding claims, **characterised in that** the casing (8) of said tuner-damper (3) is shaped as a cylinder and that each input polar electrode (5) is inserted through a side surface (9) of said cylinder; said dissipation bar (7) being inserted through a base surface (10) of said cylinder orthogonal to the side surface (9).

4. The apparatus (1) according to any one of the preceding claims, **characterised in that** each input electric polar electrode (5) extends between two opposite ends, an inner one partially immersed in the mixture and an outer one connected to the input data connector (2a) and output data connector (2b); said inner end being shaped as a half sphere.

5. The apparatus (1) according to any one of the preceding claims, **characterised in that** it comprises eight input polar electrodes (5), each being connected to a respective cable (6) of the input data connector (2a) and to a respective cable (6) of the output data connector (2b).

6. Apparatus (1) according to any one of the preceding claims, **characterised in that** the casing (8) is made of dielectric material and comprises a finned metallic plate/crown (21), which also acts as a cover, arranged at one end of the heat dissipation bar (7) opposite the side connected to the earthing system (100) and connected thereto to achieve heat dissipation.

7. The apparatus (1) according to any one of the preceding claims, **characterised in that** it comprises a resonating antenna (13) arranged in contact with an outside of the casing (8) of the tuner-damper (3) and configured with the object of maintaining the anti-electromagnetic pollution work of the tuner damping device (3) at extremes by selectively discriminating between external and local electromagnetic polluting radiation.

8. The apparatus (1) according to claim 7, **characterised in that** said antenna (13) is preferably flat, mounted on a flat support and comprises a plurality of concentric metal elements (14), preferably of circular or square shape, which are separate from one another.

9. The apparatus (1) according to claim 8, **characterised in that** each of said metal elements (14) is broken at a detachment point (15) and the position of this detachment point (15) between one element (14) and the other is opposed with respect to a median plane that cuts the antenna (13) orthogonally.

10. The apparatus (1) according to any one of the preceding claims, **characterised in that** it comprises an outer container (16) shaped as a module for an electrical panel adapted to be installed on a DIN guide.

11. Apparatus (1) according to any one of the preceding claims, **characterised in that** it is configured and formed to solve also disturbance phenomena, defined by harmonics and spurious emissions which are harmful not only to the voice and/or data electrical line itself but particularly also to voice and/or data apparatuses that are functional to the line and to electric and electronic users connected to the line, with the intrinsic and exclusive ability of ensuring safety.

12. Apparatus (1) according to any one of the preceding claims, **characterised in that** it is configured and shaped also to solve local electromagnetic pollution, electrosmog, i.e. near the apparatus, always with the intrinsic and exclusive ability of ensuring safety.

13. A telecommunication system comprising:
- one or more voice and/or data electric lines (101); and
- an apparatus (1) according to any one of the preceding claims connected to a voice and/or data input terminal (11) and a voice and/or data output terminal (12) arranged serially on the voice and/or data electric line (101).

## Patentansprüche

1. Vorrichtung (1) zur Vermeidung und Dämpfung von Spannungs- und Stromspitzen externen und internen Ursprungs für eine elektrische Sprach- und/oder Datenleitung (101) mit sehr niedriger Spannung eines Telekommunikationsnetzwerks oder -systems auf Grundlage des Erfassens und Umwandelns elektromagnetischer Energie, die Überspannungen und Überströme verursacht, umfassend:
einen Eingangsdatenverbinder (2a), der dazu konfiguriert ist, ein elektrisches Signal von der elektrischen Sprach- und/oder Datenleitung (101) zu empfangen;
einen Ausgangsdatenverbinder (2b), der dazu konfiguriert ist, das elektrische Signal an die elektrische Sprach- und/oder Datenleitung (101) zurückzugeben; und
einen Tuner-Dämpfer (3) mit seinem eigenen Gehäuse (8) und Innenvolumen (4), wobei letzteres eine Mischung aus einem inkohärenten, nicht-hygroskopischen Sediment von Partikeln aus einem piezoelektrischen und pyroelektrischen Material und einem feuerfesten inerten Material in Luft umfasst, die dazu konfiguriert ist, die Energiebelastung von äußerer und innerer elektromagnetischer Beanspruchung, die die Überspannungen und Überströme verursacht, in mechanische Energie und in Wärmeenergie umzuwandeln;
wobei der Tuner-Dämpfer (3) Folgendes umfasst:
eine Vielzahl von polaren Eingangselektroden (5), die teilweise in die Mischung eingetaucht sind und mit diesem in Kontakt stehen, jedoch voneinander getrennt und äquidistant sind;
wobei eine jede polare Elektrode (5) mit einem jeweiligen Kabel (6) des Eingangsdatenverbinders (2a) und mit einem jeweiligen Kabel (6) des Ausgangsdatenverbinders (2b) verbunden ist; wobei eine jede polare Eingangselektrode (5) dazu konfiguriert ist, das elektrische Signal zu empfangen; und
mindestens einen Wärmeableitungs- und elektrisch leitfähigen Stab (7), der zumindest teilweise in die Mischung eingetaucht ist und im Gebrauch mit einem Erdungssystem (100) verbunden ist.

2. Vorrichtung (1) nach Anspruch 1, **dadurch gekennzeichnet, dass** das inkohärente Sediment, aus dem die Mischung zusammengesetzt ist, die in das Innenvolumen (4) des Tuner-Dämpfers (3) eingeführt ist, einen Halbleiter umfasst.

3. Vorrichtung (1) nach einem der vorhergehenden Ansprüche, **dadurch gekennzeichnet, dass** das Gehäuse (8) des Tuner-Dämpfers (3) zylinderförmig ausgestaltet ist und dadurch, dass eine jede polare Eingangselektrode (5) durch eine Seitenfläche (9) des Zylinders eingeführt ist; wobei der Ableitungsstab (7) durch eine Basisfläche (10) des Zylinders orthogonal zur Seitenfläche (9) eingeführt ist.

4. Vorrichtung (1) nach einem der vorhergehenden Ansprüche, **dadurch gekennzeichnet, dass** sich eine jede elektrische polare Eingangselektrode (5) zwischen zwei gegenüberliegenden Enden erstreckt, ein inneres Ende, das teilweise in die Mischung eingetaucht ist, und ein äußeres Ende, das mit dem Eingangsdatenverbinder (2a) und dem Ausgangsdatenverbinder (2b) verbunden ist; wobei das innere Ende als Halbkugel ausgebildet ist.

5. Vorrichtung (1) nach einem der vorhergehenden Ansprüche, **dadurch gekennzeichnet, dass** sie acht polare Eingangselektroden (5) umfasst, die jeweils mit einem jeweiligen Kabel (6) des Eingangsdatenverbinders (2a) und mit einem jeweiligen Kabel (6) des Ausgangsdatenverbinders (2b) verbunden sind.

6. Vorrichtung (1) nach einem der vorhergehenden Ansprüche, **dadurch gekennzeichnet, dass** das Gehäuse (8) aus dielektrischem Material hergestellt ist und eine gerippte metallische Platte/Krone (21) umfasst, die auch als Abdeckung wirkt, die an einem Ende des Wärmeableitungsstab (7) gegenüber der Seite angeordnet ist, die mit dem Erdungssystem (100) verbunden ist und mit diesem verbunden ist, um eine Wärmeableitung zu erreichen.

7. Vorrichtung (1) nach einem der vorhergehenden Ansprüche, **dadurch gekennzeichnet, dass** sie eine Resonanzantenne (13) umfasst, die in Kontakt mit einer Außenseite des Gehäuses (8) des Tuner-Dämpfers (3) angeordnet ist und mit dem Ziel konfiguriert ist, die antielektromagnetische Verschmutzungsarbeit der Tuner-Dämpfer-Einrichtung (3) auf Extrema zu halten, indem selektiv zwischen externer und lokaler elektromagnetischer Verschmutzungsstrahlung unterschieden wird.

8. Vorrichtung (1) nach Anspruch 7, **dadurch gekennzeichnet, dass** die Antenne (13) vorzugsweise flach ist, auf einem flachen Träger montiert ist und eine Vielzahl von konzentrischen Metallelementen (14), vorzugsweise von kreisförmiger oder quadratischer Form, umfasst, die voneinander getrennt sind.

9. Vorrichtung (1) nach Anspruch 8, **dadurch gekennzeichnet, dass** ein jedes der Metallelemente (14) an einem Ablösepunkt (15) gebrochen ist und die Position dieses Ablösepunkts (15) zwischen einem Element (14) und dem anderen in Bezug auf eine Mittelebene, die die Antenne (13) orthogonal schneidet, entgegengesetzt ist.

10. Vorrichtung (1) nach einem der vorhergehenden Ansprüche, **dadurch gekennzeichnet, dass** sie einen Außenbehälter (16) umfasst, der als Modul für eine Schalttafel ausgebildet ist, die an einer DIN-Führung installiert werden kann.

11. Vorrichtung (1) nach einem der vorhergehenden Ansprüche, **dadurch gekennzeichnet, dass** sie konfiguriert und ausgebildet ist, um auch Störungsphänomene zu lösen, die durch Oberschwingungen und Störaussendungen definiert sind, die nicht nur für die elektrische Sprach- und/oder Datenleitung selbst schädlich sind, sondern insbesondere auch für Sprach- und/oder Datenvorrichtungen, die für die Leitung funktionsfähig sind, sowie für elektrische und elektronische Verbraucher, die an die Leitung angeschlossen sind, mit der intrinsischen und ausschließlichen Fähigkeit, die Sicherheit zu gewährleisten.

12. Vorrichtung (1) nach einem der vorhergehenden Ansprüche, **dadurch gekennzeichnet, dass** sie ferner konfiguriert und ausgestaltet ist, um auch lokale elektromagnetische Verschmutzung oder Elektrosmog zu lösen, d. h. in der Nähe der Vorrichtung selbst, immer mit der intrinsischen und ausschließlichen Fähigkeit, die Sicherheit zu gewährleisten.

13. Telekommunikationssystem, umfassend:
- eine oder mehrere elektrische Sprach- und/oder Datenleitungen (101); und
- eine Vorrichtung (1) nach einem der vorhergehenden Ansprüche, die mit einem Sprach- und/oder Dateneingangsanschluss (11) und einem Sprach- und/oder Datenausgangsanschluss (12) verbunden ist, die seriell auf der Sprach- und/oder Datenleitung (101) angeordnet sind.

## Revendications

1. Appareil (1) de prévention et d'amortissement des pics de tension et de courant, d'origine externe et interne, pour une ligne électrique à très basse tension de voix et/ou de données (101) d'un réseau ou système de télécommunication, sur la base de la détection et la transformation de l'énergie électromagnétique provoquant des surtensions et des surintensités, comprenant :
un connecteur de données d'entrée (2a) configuré pour recevoir un signal électrique de la ligne électrique vocale et/ou de données (101) ;
un connecteur de données de sortie (2b) configuré pour renvoyer ledit signal électrique à la ligne électrique vocale et/ou de données (101) ; et
un syntoniseur-amortisseur (3) possédant son propre boîtier (8) et volume interne (4), ce dernier comprenant un mélange d'un sédiment incohérent et non hygroscopique de particules d'un matériau piézoélectrique et pyroélectrique et d'un matériau inerte réfractaire, dans l'air, configuré pour transformer la charge énergétique de la contrainte électromagnétique externe et interne, qui provoque les surtensions et les surintensités, en énergie mécanique et en énergie thermique ;
ledit syntoniseur-amortisseur (3) comprenant :
une pluralité d'électrodes polaires d'entrée (5) partiellement immergées à l'intérieur dudit mélange et en contact avec celui-ci mais séparées et équidistantes les unes des autres ;
chaque électrode polaire (5) étant reliée à un câble (6) respectif du connecteur de données d'entrée (2a) et à un câble (6) respectif du connecteur de données de sortie (2b) ; chaque électrode polaire d'entrée (5) étant configurée pour recevoir ledit signal électrique ; et
au moins une barre de dissipation thermique et électriquement conductrice (7) au moins partiellement immergée à l'intérieur dudit mélange et reliée, lors de l'utilisation, à un système de mise à la terre (100).

2. Appareil (1) selon la revendication 1, **caractérisé en ce que** ledit sédiment incohérent dont est composé le mélange qui est introduit dans le volume interne (4) du syntoniseur-amortisseur (3) comprend un semi-conducteur.

3. Appareil (1) selon l'une quelconque des revendications précédentes, **caractérisé en ce que** le boîtier (8) dudit syntoniseur-amortisseur (3) a la forme d'un cylindre et **en ce que** chaque électrode polaire d'entrée (5) est insérée à travers une surface latérale (9) dudit cylindre ; ladite barre de dissipation (7) étant insérée à travers une surface de base (10) dudit cylindre orthogonale à la surface latérale (9).

4. Appareil (1) selon l'une quelconque des revendications précédentes, **caractérisé en ce que** chaque électrode polaire électrique d'entrée (5) s'étend entre deux extrémités opposées, l'une intérieure partiellement immergée dans le mélange et l'autre extérieure reliée au connecteur de données d'entrée (2a) et au connecteur de données de sortie (2b) ; ladite extrémité intérieure ayant la forme d'une demi-sphère.

5. Appareil (1) selon l'une quelconque des revendications précédentes, **caractérisé en ce qu'**il comprend huit électrodes polaires d'entrée (5), chacune étant reliée à un câble (6) respectif du connecteur de données d'entrée (2a) et à un câble (6) respectif du connecteur de données de sortie (2b).

6. Appareil (1) selon l'une quelconque des revendications précédentes, **caractérisé en ce que** le boîtier (8) est en matériau diélectrique et comprend une plaque/couronne métallique (21) à ailettes, qui agit aussi comme un recouvrement, disposée à une extrémité de la barre de dissipation thermique (7) opposée au côté relié au système de mise à la terre (100) et reliée à ce dernier pour réaliser la dissipation thermique.

7. Appareil (1) selon l'une quelconque des revendications précédentes, **caractérisé en ce qu'**il comprend une antenne résonante (13) disposée en contact avec une partie extérieure du boîtier (8) du syntoniseur-amortisseur (3) et configurée dans le but de maintenir le travail d'anti-pollution électromagnétique du syntoniseur-amortisseur (3) à des valeurs extrêmes en discriminant sélectivement les radiations électromagnétiques polluantes externes et locales.

8. Appareil (1) selon la revendication 7, **caractérisé en ce que** ladite antenne (13) est de préférence plate, montée sur un support plat et comprend une pluralité d'éléments métalliques (14) concentriques, de préférence de forme circulaire ou carrée, étant séparés les uns des autres.

9. Appareil (1) selon la revendication 8, **caractérisé en ce que** chacun desdits éléments métalliques (14) est brisé en un point de détachement (15) et que la position de ce point de détachement (15) entre un élément (14) et l'autre est opposée par rapport à un plan médian qui coupe orthogonalement l'antenne (13).

10. Appareil (1) selon l'une quelconque des revendications précédentes, **caractérisé en ce qu'**il comprend un récipient extérieur (16) façonné comme un module pour un panneau électrique adapté à être installé sur un guide DIN.

11. Appareil (1) selon l'une quelconque des revendications précédentes, **caractérisé en ce qu'**il est configuré et façonné pour résoudre également les phénomènes de perturbation, définis par les harmoniques et les émissions parasites qui nuisent non seulement à la ligne électrique vocale et/ou de données elle-même, mais surtout aux appareils vocaux et/ou de données qui sont fonctionnels sur la ligne et aux utilisateurs électriques et électroniques reliés à la ligne, avec la capacité intrinsèque et exclusive de garantir la sécurité.

12. Appareil (1) selon l'une quelconque des revendications précédentes, **caractérisé en ce qu'**il est configuré et façonné également pour résoudre la pollution électromagnétique locale, l'électropollution, c'est-à-dire à proximité de l'appareil, toujours avec la capacité intrinsèque et exclusive de garantir la sécurité.

13. Système de télécommunication, comprenant :
- une ou plusieurs lignes électriques vocales et/ou de données (101) ; et
- un appareil (1) selon l'une quelconque des revendications précédentes, relié à un terminal d'entrée de voix et/ou de données (11) et à un terminal de sortie de voix et/ou de données (12) disposés en série sur la ligne électrique vocale et/ou de données (101).
